(19)

Europäisches
Patentamt
European
Patent Office
Office européen
des brevets

(11) **EP 4 590 040 A1**

(12) **EUROPEAN PATENT APPLICATION**
published in accordance with Art. 153(4) EPC

(43) Date of publication:
**23.07.2025   Bulletin 2025/30**

(21) Application number: 23880218.5

(22) Date of filing: **18.10.2023**

(51) International Patent Classification (IPC):
*H04W 64/00* (2009.01)          *H04W 24/08* (2009.01)
*H04W 72/20* (2023.01)          *H04W 92/18* (2009.01)
*G01S 5/02* (2010.01)

(52) Cooperative Patent Classification (CPC):
G01S 5/02; H04W 24/08; H04W 64/00;
H04W 72/04; H04W 72/20; H04W 92/18

(86) International application number:
**PCT/KR2023/016133**

(87) International publication number:
**WO 2024/085641 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **19.10.2022   KR 20220134775**

(71) Applicant: Samsung Electronics Co., Ltd.
**Suwon-si, Gyeonggi-do 16677 (KR)**

(72) Inventors:
• **SHIN, Cheolkyu**
  **Suwon-si, Gyeonggi-do 16677 (KR)**
• **PARK, Kyoungmin**
  **Suwon-si, Gyeonggi-do 16677 (KR)**
• **RYU, Hyunsuk**
  **Suwon-si, Gyeonggi-do 16677 (KR)**
• **PARK, Sungjin**
  **Suwon-si, Gyeonggi-do 16677 (KR)**

(74) Representative: **Nederlandsch Octrooibureau**
**P.O. Box 29720**
**2502 LS The Hague (NL)**

(54) **METHOD AND APPARATUS FOR SIDELINK POSITIONING IN WIRELESS COMMUNICATION SYSTEM**

(57)    The present disclosure relates to a 5G or 6G communication system for supporting a higher data transmission rate.

According to an embodiment of the present invention, a method performed by a first UE, which operates in a wireless communication system and supports sidelink, may comprise the steps of: receiving a sidelink positioning reference signal (S-PRS) from a plurality of second UEs or transmitting the S-PRS to the plurality of second UEs; acquiring a first time offset value based on a synchronization error between the plurality of second UEs; and transmitting the first time offset value to a location management server (LMF) or a third UE connected to the location management server, wherein the plurality of second UEs may be anchor UEs for measuring the location of the first UE, and location information regarding the first UE may be calculated on the basis of a measurement value of the S-PRS and the first time offset value.

FIG. 7

**Description**

[Technical Field]

The disclosure relates to a wireless mobile communication system, and more particularly, to a method and apparatus for performing positioning (location measurement) via a sidelink.

[Background Art]

5G mobile communication technologies define broad frequency bands such that high transmission rates and new services are possible, and can be implemented not only in "Sub 6 GHz" bands such as 3.50 GHz, but also in "Above 6 GHz" bands referred to as mmWave including 28 GHz and 39 GHz. In addition, it has been considered to implement 6G mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra-Reliable Low-Latency Communications (URLLC), and massive Machine-Type Communications (m MTC), there has been ongoing standardization regarding beamforming and massive MIMO for mitigating radio-wave path loss and increasing radio-wave transmission distances in mmWave, supporting various numerologies (for example, operating a plurality of subcarrier spacings) for efficiently utilizing mmWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding locations and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, Mobile Edge Computing (MEC) for receiving services based on UE locations, and the like.

As such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, drone communication, and the like.

Furthermore, such development of 5G mobile communication systems will serve as a basis for developing not only new waveforms for providing coverage in terahertz hands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

Accordingly, various attempts are being made to apply 5G communication systems to IoT networks. For example, technologies such as a sensor network, machine to machine (M2M) communication, and machine type communication (MTC) are implemented by techniques such as beamforming, MIMO, and array antenna schemes, which are 5G communication technologies. The application of cloud radio access network (cloud RAN) as the big data processing technology described above may be an example of convergence of 5G communication technology and IoT technology. As such, in a communication system, a plurality of services may be provided to a user, and to provide the plurality of services to the user, a method of providing each of the plurality of services in the same time period according to the characteristics and an apparatus using the method is required. Various services provided in a 5G communication system are being studied, and one of them is a service that satisfies requirements of low latency and high reliability. In addition, the demand for mobile services is exploding, and location based services (LBSs), which are mainly driven by two main requirements, i.e., emergency services and commercial applications, are rapidly growing. In particular, in communication using a sidelink, an NR sidelink system supports unicast communication, groupcast (or multicast) communication, and broadcast communication between terminals. In addition, unlike LTE sidelinks that aim to transmit and receive basic safety information required for driving a vehicle on a road, NR sidelinks aim to provide more advanced services such as platooning, advanced driving, extended sensor, and remote driving.

[Disclosure]

[Technical Problem]

The disclosure relates to a wireless mobile communication system, and more particularly, to a method and apparatus for performing positioning (location measurement) via a sidelink. Specifically, the disclosure proposes methods for supporting sidelink positioning based on Time Difference Of Arrival (TDOA) when performing positioning via a sidelink.

[Technical Solution]

According to an embodiment of the disclosure, a method performed by a first terminal operating in a wireless communication system and supporting a sidelink is disclosed. The method of the first terminal may comprise receiving a sidelink positioning reference signal (S-PRS) from a plurality of second terminals or transmitting the S-PRS to the plurality of second terminals; acquiring a first time offset value based on a synchronization error between the plurality of second terminals; and transmitting the first time offset value to a location management server (LMF) or a third terminal connected to the location management server. The plurality of second terminals may be anchor terminals for location measurement of the first terminal, and location information of the first terminal may be calculated based on a measurement value of the S-PRS and the first time offset value.

In the method of the first terminal, the transmitting the first time offset value to the location management server or the third terminal may be performed through a positioning protocol.

In the method of the first terminal, the acquiring the first time offset value may be performed by calculation based on reception from at least one of the plurality of second terminals or a measurement value of S-PRS received from at least one of the plurality of second terminals.

In the method of the first terminal, the first terminal may be constituted with the location management server.

In the method of the first terminal, the calculation of the location information of the first terminal may be performed on the first terminal, the second terminal, the third terminal or the location management server.

According to another embodiment of the disclosure, a method performed by at least one of a plurality of second terminals operating in a wireless communication system and supporting a sidelink is disclosed. The method of the second terminal may comprise transmitting S-PRS to a first terminal or receiving the S-PRS from the first terminal; acquiring a first time offset value based on a synchronization error between the plurality of second terminals; and transmitting the first time offset value to a location management server (LMF) or a third terminal connected to the location management server. The plurality of second terminals may be anchor UEs for location measurement of the first terminal, and location information of the first terminal may be calculated based on a measurement value of the S-PRS and the first time offset value.

[Advantageous Effects]

The disclosure is to propose a method and procedure for supporting sidelink positioning based on Time Difference Of Arrival (TDOA) when a terminal performs positioning (location measurement) in a sidelink. The proposed method can enable positioning in sidelink based on TDOA.

[Brief description of Drawings]

FIG. 1 is a diagram illustrating a system according to an embodiment of the disclosure.

FIG. 2 is a diagram illustrating a communication method performed through a sidelink, according to an embodiment of the disclosure.

FIG. 3 is a diagram describing a resource pool defined by a set (group) of resources on time and frequency used for transmission and reception of a sidelink, according to an embodiment of the disclosure.

FIGS. 4 to 6 are diagrams describing cases of calculating a location of a terminal through a sidelink, according to an embodiment of the disclosure.

FIG. 7 is a diagram describing a case where positioning is performed using TDOA scheme 1, according to an embodiment of the disclosure.

FIG. 8 is a diagram describing a case where positioning is performed using TDOA scheme 2, according to an embodiment of the disclosure.

FIG. 9 is a block diagram illustrating an internal structure of a terminal according to an embodiment of the disclosure.

FIG. 10 is a block diagram illustrating an internal structure of a base station according to an embodiment of the disclosure.

[Mode for Disclosure]

Hereinafter, an embodiment of the disclosure will be described in detail with reference to the attached drawings.

In describing embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions may be loaded in a processor of a general purpose computer, a special purpose computer, or other programmable data processing equipment, and thus, the instructions performed by a processor of a computer or other programmable data processing equipment may generate a means configured to perform functions described in flowchart block(s). These computer program instructions may also be stored in a computer usable or computer-readable memory that can direct a computer or other programmable data processing equipment to function in a particular manner, such that the instructions stored in the computer usable or computer-readable memory produce an article of manufacture including instruction means that implement the function specified in the flowchart block(s). These computer program instructions may also be loaded in a computer or other programmable data processing equipment, and thus, a computer-executable process may also be generated by performing a series of operation steps on the computer or the other programmable data processing equipment so that the instructions executed in the computer or the other programmable data processing equipment provide steps for executing functions described in flowchart block(s).

Furthermore, each block may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the corresponding function.

As used herein, the '~unit' refers to a software element or a hardware element, such as FPGA or ASIC, which performs a predetermined function. However, the '~unit' does not always have a meaning limited to software or hardware. The '~unit' may be constructed either to be stored in an addressable storage medium or to execute one or more processors. Therefore, the '~unit' includes, for example, elements such as software elements, object-oriented software elements, class elements and task elements, processes, functions, properties, procedures, subroutines, segments of a program code, drivers, firmware, micro-codes, circuits, data, database, data structures, tables, arrays, and parameters.

The elements and functions provided by the '~unit' may be either combined into a smaller number of elements, and a '~unit', or divided into a larger number of elements, and a '~unit'. Moreover, the elements and '~unit' or may be implemented to reproduce one or more CPUs within a device or a security multimedia card. Also, in an embodiment, a '~unit' may include one or more processors.

Embodiments of the disclosure will be described mainly based on a radio access network (RAN), i.e., new RAN, and a core network, i.e., a packet core (a 5G system, a 5G core network, or a next generation (NG) core), in the 5G mobile communication standard specified by the mobile communication standardization organization, 3rd Generation Partnership Project long term evolution (3GPP). However, the main gist of the disclosure can be applied to other communication systems having similar technical backgrounds with slight modifications without significantly departing from the scope of the disclosure, and this will be possible at the discretion of a person skilled in the art having technical knowledge in the technical field of the disclosure.

In a 5G system, a network data collection and analysis function (NWDAF), which is a network function that provides a function to analyze and provide data collected from a 5G network to support network automation, can be defined. The NWDAF may collect/store/analyze information from a 5G network and provide the results to unspecified network functions (NFs), and the analysis results may be used independently by each NF.

Hereinafter, for convenience of description, some terms and names defined in standards of 3GPP (e.g., standards of 5G, NR, LTE, or similar systems) may be used. However, the disclosure is not limited by these terms and names, and may be applied in the same way to systems that conform other standards.

In addition, as used herein, terms for identifying access nodes, terms referring to network entities, terms referring to messages, terms referring to interfaces between network entities, terms referring to a variety of identification information, and the like are exemplified for convenience of description. Accordingly, the disclosure is not limited to the terms used herein, which may be replaced with other terms referring to objects having equivalent technical meanings.

In NR sidelinks, positioning (location measurement) may be performed through a sidelink between terminals. Thus, a method for measuring a location of a terminal by using a positioning signal transmitted through a sidelink may be considered. A conventional method of measuring a location of a terminal by using a positioning signal transmitted through a downlink and an uplink between a terminal and a base station is feasible only in case that the terminal is within the coverage of the base station. However, in case that sidelink positioning is introduced, the location of a terminal may be measured even in case that the terminal is out of a coverage of a base station. The terminal may transmit a sidelink positioning reference signal (S-PRS) to perform positioning in the sidelink. The disclosure proposes a method for supporting sidelink positioning based on Time Difference Of Arrival (TDOA) when a terminal performs positioning (location measurement) through a sidelink. In order to perform positioning based on TDOA, synchronization between terminals transmitting S-PRS is very important. In other words, in case that the synchronization between terminals transmitting S-PRS is not well matched, the positioning performance through TDOA cannot be guaranteed. In order to improve the accuracy of synchronization between terminals in the sidelink, an increase in equipment and cost may be required. In addition, since terminals in the sidelink may be synchronized with different sources, it may be difficult to apply TDOA between terminals with different synchronized sources. Therefore, the disclosure proposes methods for solving these problems. Through the proposed method, the performance of positioning through TDOA in the sidelink may be guaranteed, and thus sidelink positioning may be made possible.

Embodiments of the present specification are proposed to support the above-described scenario, and in particular, aim to provide a method and procedure for applying Time Difference Of Arrival (TDOA) in the process of measuring (positioning) the location of a terminal in a sidelink.

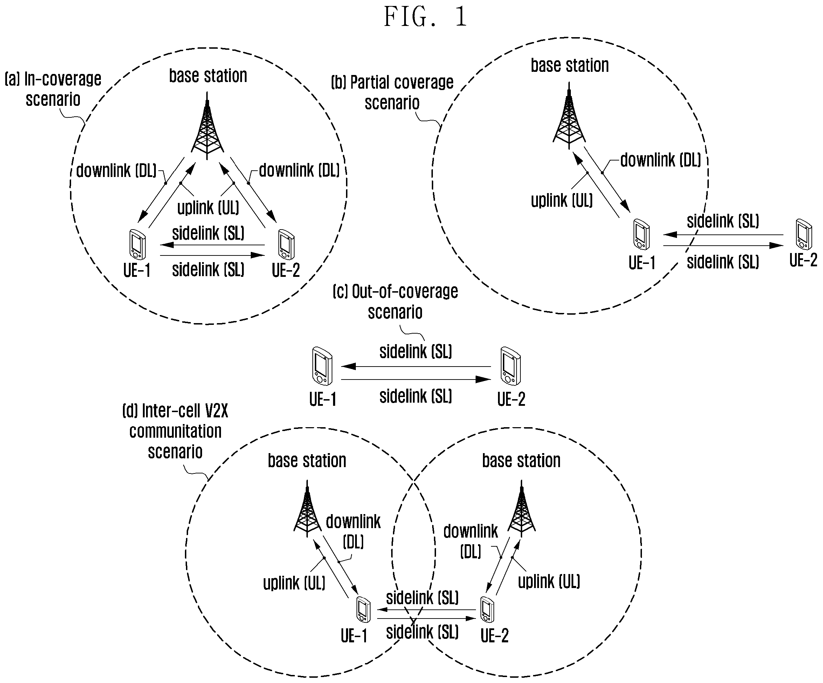

FIG. 1 is a diagram illustrating a system according to an embodiment of the disclosure.

With reference to FIG. 1, (a) in FIG. 1 illustrates an example of a case where all terminals (UE-1 and UE-2) communicating via sidelink are located within the coverage of a base station (In-Coverage, IC). All of the UEs may receive data and control information from the base station through a downlink (DL) or transmit data and control information to a base station through an uplink (UL). Herein, the data and control information may be data and control information for sidelink communication. The data and control information may also be data and control information for general cellular communication. In addition, the UEs may transmit/receive data and control information for corresponding communication through a sidelink (SL).

With reference to FIG. 1, (b) in FIG. 1 illustrates an example of a case where, among the UEs, UE-1 is located within the coverage of the base station and UE-2 is located outside the coverage of the base station. That is, (b) in FIG. 1 illustrates an example of a partial coverage (PC) in which only some terminals (UE-2) are located outside the coverage of the base station. UE-1, which is located within the coverage of the base station, may receive data and control information from the base station through a DL or transmit data and control information to the base station through a UL. UE-2, which is located outside the coverage of the base station, cannot receive data and control information from the base station through a DL, and cannot transmit data and control information to the base station through a UL. UE-2 can transmit/receive data and control information for corresponding communication to/from the UE-1 through an SL.

With reference to FIG. 1, (c) in FIG. 1 illustrates an example of a case where all of the UEs are located outside the coverage of the base station (an out-of-coverage, OOC). Accordingly, both UE-1 and UE-2 cannot receive data and control information from the base station through a DL, and also cannot transmit data and control information to the base station through a UL. UE-1 and UE-2 can transmit/receive data and control information through an SL.

With reference to FIG. 1, (d) in FIG. 1 illustrates an example of a scenario in which sidelink communication is performed between UE-1 and UE-2, which are each located in a different respective cell. In particular, (d) in FIG. 1 illustrates a case where UE-1 and UE-2 are connected to different respective base stations (RRC-connected state), or are camping on the different respective base stations (an RRC-disconnected state or an RRC idle state). In this case, UE-1 may be a transmitting UE and UE-2 may be a receiving UE in an SL. Alternatively, UE-1 may be a receiving UE and UE-2 may be a transmitting UE in the SL. UE-1 may receive a system information block (SIB) from a base station to which UE-1 is connected (or on which UE-1 camps), and UE-2 may receive an SIB from another base station to which UE-2 is connected (or on which UE-2 camps). In this case, an existing SIB may be used as the SIB, or an SIB separately defined for sidelink communication may be used as the SIB. In addition, information of the SIB received by UE-1 and information of the SIB received by UE-2 may be different from each other. Accordingly, in order to perform sidelink communication between the UEs (UE-1 and UE-2) located in different cells, a method for interpreting SIB information transmitted from different cells may be additionally required by unifying the information or by signaling the information.

Although FIG. 1 illustrates an SL system including two UEs (UE-1 and UE-2), for convenience of description, the disclosure is not limited thereto and communication may be performed between more than two UEs. In addition, an interface (a UL and a DL) between a base station and UEs may be referred to as a Uu interface, and an SL communication between UEs may be referred to as a PC5 interface. Therefore, in the disclosure, these terms may be interchangeably used. Meanwhile, in the disclosure UE may refer to a general UE and a UE supporting vehicle-to-everything (V2X). In particular, in the disclosure, UE may mean a handset (e.g., a smart phone) of a pedestrian. Alternatively, UE may include a vehicle that supports vehicle-to-vehicle (V2V) communication, a vehicle that supports vehicle-to-pedestrian (V2P) communication, a vehicle that supports vehicle-to-network (V2N) communication, or a vehicle that supports vehicle-to-infrastructure (V2I) communication. In addition, in the disclosure, UE may include a road side unit (RSU) equipped with UE functions, an RSU equipped with base station functions, or an RSU equipped with some of base station functions and some of UE functions. In addition, according to an embodiment of the disclosure, a base station may be a base station supporting both V2X communication and general cellular communication, or may be a base station supporting only V2X communication. In this case, the base station may be a 5G base station (gNB), a 4G base station (eNB), or an RSU, Therefore, a base station may also be referred to as an RSU in the disclosure.

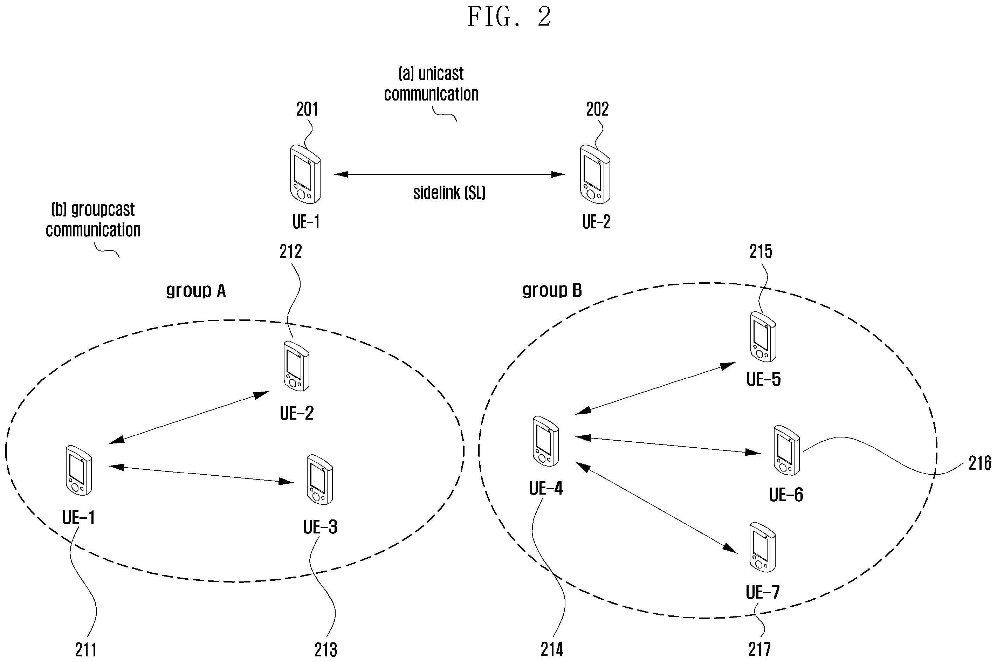

FIG. 2 is a diagram illustrating a communication method performed through a sidelink, according to an embodiment of the disclosure.

With reference to (a) in FIG. 2, a UE-1 201 (e.g., a TX UE) and a UE-2 202 (e.g., an RX UE) that may perform one-to-one communication, which may be referred to as unicast communication. In an SL, capability information and configuration information may be exchanged between the UEs through PC5-RRC defined in a unicast link between the UEs. Also, the configuration information may be exchanged through an SL medium access control (MAC) control element (CE) defined in the unicast link between the UEs.

With reference to (b) in FIG. 2, a TX UE and RX UE may perform one-to-many communication, which may be referred to as groupcast or multicast communication. In (b) in FIG. 2, UE-1 211, UE-2 212, and UE-3 213 may constitute one group (Group A) to perform groupcast communication, and UE-4 214, UE-5 215, UE-6 216, and UE-7 217 may constitute another group (Group B) to perform groupcast communication. Each UE performs groupcast communication only within the group to which the UE belongs, and communication between different groups may be performed through unicast, groupcast, or broadcast communication. (b) in FIG. 2 illustrates that two groups (Group A and Group B) are constituted, but the disclosure is not limited thereto.

Meanwhile, although not illustrated in FIG. 2, UEs may perform broadcast communication in SLs. Broadcast communication refers to a case in which data and control information transmitted by a transmitting UE through SLs are received by all other UEs. For example, assuming that, (b) in FIG. 2, UE-1 211 is a transmitting UE for broadcast, all other UEs (UE-2 212, UE-3 213, UE-4 214, UE-5 215, UE-6 216, and UE-7 217) receive data and control information transmitted by UE-1 211.

Unlike LTE V2X, in NR V2X, support may be considered for a form in which a vehicle UE transmits data to only one specific node through unicast and a form in which data is transmitted to multiple specific nodes through groupcast. For example, such unicast and groupcast technologies may be useful for a service scenario, such as platooning being a technology that connects two or more vehicles via a network to drive them as a cluster. In particular, a leader node of a group connected by platooning may need unicast communication for the purpose of controlling a specific node of the group, and a groupcast communication may be needed for the purpose of simultaneously controlling a group consisting of a plurality of specific nodes.

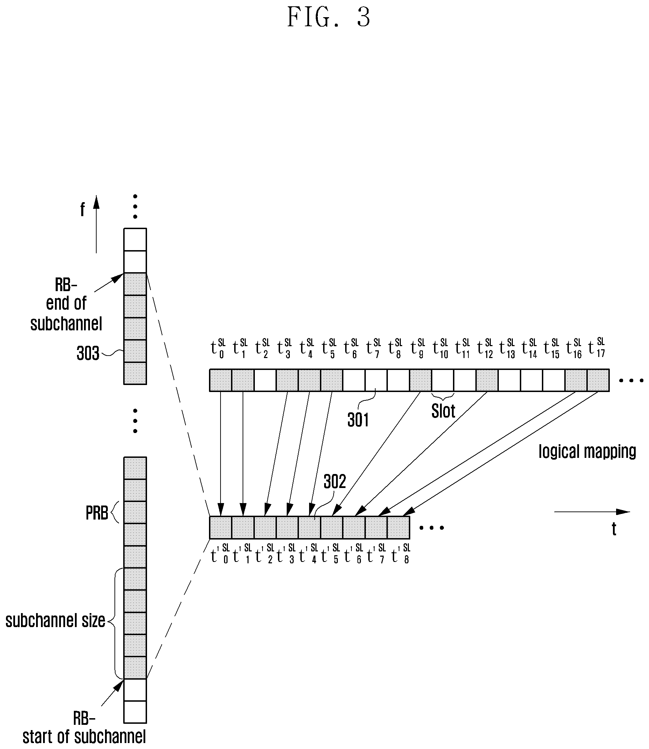

FIG. 3 is a diagram describing a resource pool defined by a set (group) of resources on time and frequency used for transmission and reception of an SL, according to an embodiment of the disclosure. In the resource pool, the resource allocation unit (resource granularity) of the time axis may be slot. In addition, the resource allocation unit of the frequency axis may be sub-channel consisting of one or more physical resource blocks (PRBs). In the disclosure, an example of a case where the resource pool is discontinuously allocated on the time axis is described, but a resource pool may be continuously allocated on the time axis. In addition, although, an example in which the resource pool is continuously allocated on the frequency axis is described, a method for discontinuously allocating a resource pool on the frequency axis is not excluded from the disclosure.

With reference to FIG. 3, a case (301) where a resource pool is discontinuously allocated on the time axis is illustrated. With reference to FIG. 3, a case where granularity of resource allocation on the time axis is constituted with a slot is illustrated. First, SL slots may be defined within slots used for a UL. In particular, the length of symbols used for an SL in one slot may be configured in SL bandwidth part (BWP) information. Therefore, among the slots used for the UL, slots in which the length of symbols configured as an SL is not guaranteed are unable to serve as SL slots. In addition, slots in which a sidelink synchronization signal block (S-SSB) is transmitted are excluded from the slots belonging to the resource pool. With reference to reference numeral 301, a set of slots that may be used for an SL on the time axis except for such slots is illustrated as $\left(t_0^{SL}, t_1^{SL}, t_2^{SL}, ...\right)$. In the reference numeral 301, shaded portions represent SL slots belonging to the resource pool. The SL slots belonging to the resource pool may be (pre-)configured in resource pool information through a bitmap. With reference to reference numeral 302, the set(group) of the SL slots belonging to the resource pool on the time axis is illustrated as $\left(t'_0^{SL}, t'_1^{SL}, t'_2^{SL}, ...\right)$. In the disclosure, (pre-)configuration may refer to configuration information, which is pre-configured and then stored in a UE, or may refer to a case in which a UE is configured by a base station in a cell-common manner. Here, cell-common may mean that UEs in a cell receive the same information configuration from a base station. In this case, the UEs may consider a method for receiving a sidelink system information block (SL-SIB) from the base station and acquiring cell-common information. In addition, (pre-)configuration may refer to a case in which a UE is configured in a UE-specific manner after an RRC connection with a base station is established. Here, UE-specific may be replaced with the term, UE-dedicated, and may mean that each UE receives configuration information with a particular value. In this case, the UE may consider a method for receiving an RRC message from the base station and acquiring UE-specific information. In addition, for (pre-)configuration, a method configured with resource pool information and a method not configured with resource pool information may be considered. In case that (pre-)configuration is performed in resource pool information, all UEs operating in a corresponding resource pool may operate according to common configuration information, except for the UEs configured in a UE-specific method after an RRC connection with the base station is established. However, the method for performing (pre-)configuration not in resource pool information is basically to perform the (pre-) configuration independently of the resource pool configuration information. For example, one or more modes may be (pre-)configured in a resource pool (e.g., A, B, and C), and which one of the (pre-)configured modes to use in the resource pool (e.g., A or B or C) may be indicated through information (pre-)configured independently of resource pool configuration information. In addition, in SL unicast transmission, (pre-)configuration may be performed via PC5-RRC. Alternatively, a method in which (pre-)configuration is performed via MAC-CE may also be considered. It should be noted that (pre-)configuration in the disclosure means that all of the cases described above can be applied.

With reference to reference numeral 303 in FIG. 3, a case where a resource pool is continuously allocated on the frequency axis is illustrated. Resource allocation in the frequency axis may be configured in SL bandwidth part (BWP) information, and may be constituted in the units of sub-channels. A sub-channel may be defined as a resource allocation unit on the frequency axis including one or more physical resource blocks (PRBs). That is, a sub-channel may be defined as an integer multiple of PRB. With reference to reference numeral 303, a sub-channel may be composed of 5 consecutive PRBs, and the size of a sub-channel, (sizeSubchannel) may be the size of 5 consecutive PRBs. However, the contents illustrated in the drawing is only an example of the disclosure, and the size of a sub-channel may be configured differently and one sub-channel is composed of consecutive PRBs in general, but a sub-channel is not necessarily composed of consecutive PRBs. Sub-channel may be a basic unit of resource allocation for PSSCH. In reference numeral 303, startRB-Subchannel may indicate the starting location of a sub-channel on the frequency axis in a resource pool. In case that resource allocation on the frequency axis is performed in units of sub-channels, resources on the frequency axis may be allocated according to the configuration information such as the indices of resource blocks (RBs) (startRB-subchannel) at which sub-channels start, information about the number of PRBs in one sub-channel (sizeSubchannel), and the total number of sub-channels (numSubchannel). In this case, information about startRB-Subchannel, sizeSubchannel, numSubchannel, etc. may be (pre-)configured in frequency-axis resource pool information.

As one of methods for allocating transmission resources in an SL, there is a method for receiving allocation for SL transmission resources from a base station in case where a UE is within the coverage of the base station. Hereinafter, this method is referred to as Mode 1. In other words, Mode 1 may be a method, performed by a base station, of allocating resources used for SL transmission to RRC-connected UEs in a dedicated scheduling scheme. Mode 1 method enables a base station to manage resources of an SL, and thus, is effective in interference management and resource pool management. On the other hand, methods for allocating transmission resources in an SL may include a method for allocating transmission resources through direct sensing by a UE in an SL. Hereinafter, this method is referred to as Mode 2. In case of Mode 2, it may be referred to as UE autonomous resource selection. Unlike Mode 1 in which a base station directly participates in resource allocation, in Mode 2, a transmitting UE autonomously selects resources through a sensing and resource selection procedure defined based on a (pre-)configured resource pool, and transmits data through the selected resources. Next, when transmission resources are allocated through Mode 1 or Mode 2, the UE may transmit/receive data and control information through an SL. Here, the control information may include 1st stage SL control information (SCI) transmitted through a physical SL control channel (PSCCH). 1st stage SCI may be named SCI format 1-X. In addition, the control information may include 2nd stage SCI transmitted through a physical SL shared channel (PSSCH). 2nd stage SCI may be named SCI format 2-X. In SCI format 1-X and SCI format 2-X, X may be represented by one or more different values to distinguish different formats.

Next, a method is described of using a positioning reference signal (PRS) transmitted through a DL and a UL of a UE and a base station, for positioning to measure a location of the UE. In the disclosure, the method that uses a positioning signal transmitted through a DL and a UL of a UE and a base station is referred to as radio access technology (RAT)-dependent positioning. In addition, other positioning methods may be classified as RAT-independent positioning. In particular, in an LTE system, as a RAT-dependent positioning technique, methods such as observed time difference of arrival (OTDOA), UL time difference of arrival (UTDOA), and enhanced cell identification (E-CID) may be used. In an NR system, methods such as DL time difference of arrival (DL-TDOA), DL angle-of-departure (DL-AOD), multi-round trip time (multi-RTT), NR E-CID, UL time difference of arrival (UL-TDOA), and UL angle-of-arrival (UL-AOA) may be used. On the other hand, RAT-independent positioning technique may include assisted global navigation satellite systems (A-GNSS), a sensor, a wireless local area network (WLAN), and Bluetooth,

The disclosure focuses on RAT-dependent positioning methods supported through an SL. In the case of interface between a base station and UEs (UL and DL, hereinafter referred to as Uu), RAT-dependent positioning is available only in case where a UE is within the coverage of a base station. However, it is noted that RAT-dependent positioning in SL may not be limited to a case where the UE is within the coverage of the base station. For RAT-dependent positioning in Uu, positioning protocols such as LTE Positioning Protocol (LPP), LTE Positioning Protocol Annex (LPPa), and NR Positioning Protocol Annex (NRPPa) may be used. First, LPP may be considered as a positioning protocol defined between a UE and a location server (LS), and LPPa and NRPPa may be considered as protocols defined between a base station and a location server. Here, the location server may perform the function of Location Management Function (LMF) as an entity that manages location measurement. In addition, the location server may also be named LMF or other names. LPP is supported in both LTE and NR systems, and the following roles for positioning may be performed via LPP.

*      Positioning capability exchange
*      assistance data transmission
*      location information transmission
*      error handling
*      abort

It is note that a UE and an LS perform the above roles through LPP, and a base station may perform a role of enabling the UE and the LS to exchange positioning information. In this case, the exchange of positioning information through LPP may be performed in a base station-transparent manner. This means that the base station is not involved in the exchange of positioning information between the UE and the LS.

In the above, in the case of the positioning capability exchange, the UE may exchange supportable positioning information with the LS. For example, the supportable positioning information may indicate whether the positioning method supported by the UE is UE-assisted, UE-based, or both. Here, UE-assisted refers to a scheme in which the UE transfers only a measurement value for a positioning technique to the LS based on a received positioning signal that is applied without directly measuring the absolute location of the UE, and the absolute location of the UE is calculated by the LS. Here, the absolute position may refer to two-dimensional (x,y) and three-dimensional (x,y,z) coordinate location information of the UE based on longitude and latitude. On the other hand, UE-based may be a scheme in which the UE may directly measure the absolute location of the UE, and for this, the UE needs to receive a positioning signal, together with location information of the entity that sends the positioning signal.

While LTE systems support only the UE-assisted scheme, NR systems may support both UE-assisted and UE-based positioning. Next, the assistance data transmission may be a significantly important factor in positioning, to accurately measure the location of the UE. In particular, in the case of assistance data transmission, the LS may provide the UE with configuration information about the positioning signal, information about candidate cells and transmission reception points (TRPS) to receive the positioning signal, and the like. In particular, in case that DL-TDOA is used, the information about the candidate cells and TRPs to receive the positioning signal may be information about reference cells, reference TRPs, neighbor cells, and neighbor TRPs. In addition, a plurality of candidates for neighbor cells and neighbor TRPs may be provided, together with information on which cell and TRP the UE should select to measure positioning signals. In order for the UE to accurately measure the location, it is necessary to properly select information about candidate cells and TRPs to be used as a reference. For example, when a channel for a positioning signal received from a corresponding candidate cell and TRP is a line-of-sight (LOS) channel, i.e., a channel having fewer non-LOS (NLOS) channel components, the accuracy of positioning measurement may increase. Therefore, in case that the LS provides the UE with information about candidate cells and TRPs, which are the reference for performing positioning by collecting various pieces of information, the UE may perform more accurate positioning measurement.

Next, the location information transmission may be performed through LPP. The LS may request location information from the UE, and the UE may provide measured location information to the LS in response to the corresponding request. In the case of UE-assisted, the corresponding location information may be a measurement value with respect to a positioning technique based on a received positioning signal. On the other hand, in the case of UE-based positioning, the location information may be two-dimensional (x,y) and three-dimensional (x,y,z) coordinate position values of the UE. When the LS requests the location information from the UE, the LS may include required accuracy, response time, and the like, as positioning quality-of-service (QoS) information. In case that the corresponding positioning QoS information is requested, the UE needs to provide the LS with the measured location information to satisfy the corresponding accuracy and response time, and, in case that it is impossible to satisfy the QoS, the UE may consider error handling and abort. However, this is only an example, and error handling and abort may be performed on positioning in other cases than those in which it is impossible to satisfy QoS.

Next, in the case of a positioning protocol defined between the base station and the LS, it is referred to as LPPa in LTE systems, and the following functions may be performed between the base station and the LS.

* E-CID location information transmission
* OTDOA information transmission
* General error state reporting
* Assistance information transmission

Next, in the case of a positioning protocol defined between the base station and the LS, it is referred to as NRPPa in NR systems, and includes the roles performed by the above LPPa, and the following functions may be additionally performed between the base station and the LS.

* Positioning information transmission
* Measurement information transmission
* TRP information transmission

Unlike in LTE systems in NR systems, more positioning techniques are supported. Therefore, various positioning techniques may be supported through the positioning information transmission. For example, positioning measurement may be performed by a base station through a positioning sounding reference signal (SRS) transmitted by a UE. Accordingly, information related to positioning SRS configuration and activation/deactivation may be exchanged between the base station and the LS using the above positioning information. Next, the measurement information transmission is a function of exchanging, between the base station and the LS, information related to multi-RTT, UL-TDOA, and UL-AOA, which are not supported in LTE systems. Last, information related to performing of TRP-based positioning may be exchanged by the TRP information transmission, because TRP-based positioning may be performed in NR systems whereas cell-based positioning is performed in LTE systems.

Entities performing positioning-related configuration and entities calculating positioning for measuring a location of a UE in an SL may be classified into the following three types:

* UE (no LS)
* LS (through BS)
* LS (through UE)

First, in the above, the location server (LS) denotes a location server, the base station (BS) denotes a base station such as a gNB or eNB, and UE denotes a UE performing transmission and reception through an SL. As described above, the UE performing transmission and reception through an SL may be a vehicle UE or a pedestrian UE. In addition, the UE performing transmission and reception through an SL may include a road side unit (RSU) having UE functions, an RSU having base station functions, or an RSU having some of base station functions and some of UE functions. In addition, the UE performing transmission and reception through an SL may include a positioning reference unit (PRU), the location of the UE is known. UE (no LS) denotes an SL UE not connected to the LS. LS (through BS) is LS, and denotes an LS connected to a base station. On the contrary, LS (through UE) is LS, and denotes an LS connected to the SL UE. In other words, LS (through UE) indicates LS is available even in case that the UE is not within the base station coverage. Here, LS (through UE) may be available only to certain UEs, such as an RSU or a PRU, other than general UEs. In addition, a UE connected to the LS through an SL may be defined as a new type of device. In addition, only a particular UE supporting UE capability connected to the LS may perform a function of connecting to the LS through an SL.

In Table 1, Cases 1 to 9 indicate various combinations of an entity that performs positioning-related configuration and an entity that calculates positioning for measuring a location of a UE on an SL. In the disclosure, a UE on which location measurement is required to be performed is referred to as a target UE. In addition, a UE, the location of which is known and which is able to provide positioning information for measuring the location of the target UE, is referred to as a positioning reference (PosRef) UE. Therefore, a PosRef UE may have its location information and provide the location information of the UE together with sidelink positioning reference signal (S-PRS). In other words, the PosRef UE may be a UE whose location is already known (known location). It is noted that the terms target UE and PosRef UE may be replaced with other terms. For example, PosRef UE may also be referred to as an anchor UE. In the embodiments below, the term anchor UE will be used instead of PosRef UE. In addition, positioning configuration may be classified into UE-configured and network-configured schemes. In Table 1, cases in which positioning configuration is UE (no LS) may correspond to a UE-configured scheme. The UE-configured scheme is advantageous in that positioning configuration may be performed even in case that the UE is not within a network (base station) coverage. In Table 1, cases in which positioning configuration is LS (through BS) may correspond to a network-configured scheme. The network-configured scheme is a case where a UE is in a network coverage, in which positioning calculation and measurement information is reported to a base station and then measurement of the location of a target UE is performed by an LS connected to the base station. Thus, delay may occur due to signaling related to the location measurement, but more accurate location measurement may be possible. Finally, in Table 1, cases in which positioning configuration is LS (through UE) may not be classified as the network-configured scheme, because the UE is not configured within the network coverage through the base station. In addition, although configuration is provided from the LS connected to the UE, but in case that it is not classified by the UE being configured, these cases may not be classified as the UE-configured scheme. However, in case that it is classified by the UE being configured, it may be classified as the UE-configured scheme. Accordingly, the cases of LS (through UE) may be named in a way other than the UE-configured or network-configured scheme.

In addition, positioning calculation may be classified into two schemes, i.e., UE-assisted and UE-based schemes, as described above. In Table 1, cases in which positioning calculation is UE (no LS) may correspond to the UE-based, and cases in which positioning calculation is LS (through BS) or LS (through UE) may generally correspond to the UE-assisted. However, in cases in which positioning calculation is LS (through UE) and the corresponding LS is interpreted as the UE may be classified into the LS (through UE) and UE-based.

[Table 1]

|  | Positioning configuration | Positioning calculation |
|---|---|---|
| Case 1 | UE (no LS) | UE (no LS) |
| Case 2 | UE (no LS) | LS (through BS) |
| Case 3 | UE (no LS) | LS (through UE) |
| Case 4 | LS (through BS) | UE (no LS) |
| Case 5 | LS (through BS) | LS (through BS) |
| Case 6 | LS (through BS) | LS (through UE) |
| Case 7 | LS (through UE) | UE (no LS) |
| Case 8 | LS (through UE) | LS (through BS) |
| Case 9 | LS (through UE) | LS (through UE) |

In Table 1 above, positioning configuration information may include sidelink positioning reference signal (S-PRS) configuration information. The S-PRS configuration information may be pattern information of an S-PRS and information related to a time/frequency transmission location. In addition, in Table 1, the positioning calculation may be performed by the UE receiving an S-PRS and performing measurement from the received S-PRS, and the positioning measurement and calculation method may vary depending on which positioning method is applied. Measurement of location information in an SL may be absolute positioning to provide two-dimensional (x,y) and three-dimensional (x,y,z) coordinate position values of a UE, or relative positioning to provide relative two-dimensional or three-dimensional location information from another UE. In addition, the location information in the SL may be ranging information including one of the distance and direction from another UE. In case that the meaning of the ranging in the SL includes both distance and direction information, ranging may have the same meaning as that of relative positioning. In addition, as a positioning method, SL time difference of arrival (SL-TDOA), SL angle-of-departure (SL-AOD), SL Multi-Round Trip Time (SL Multi-RTT), SL Round Trip Time (SL RTT), SL E-CID, SL angle-of-arrival (SL-AOA) method, or the like may be considered.

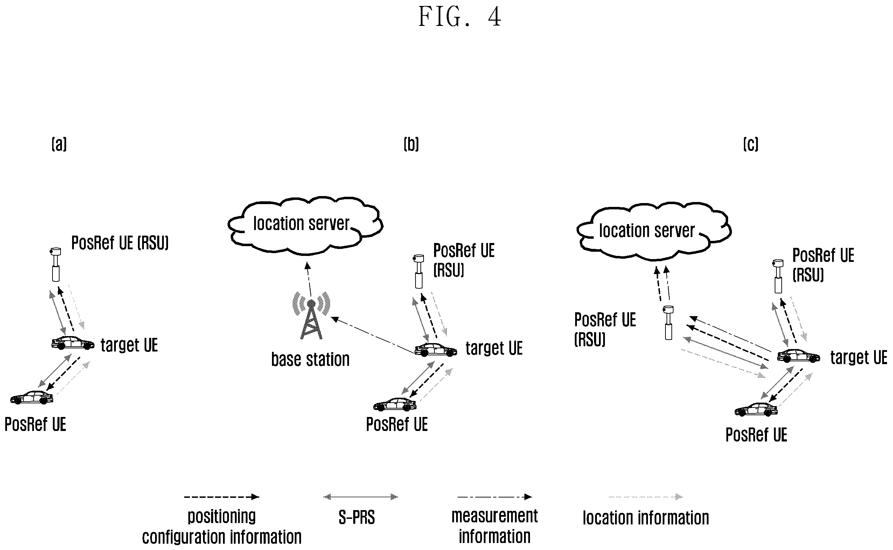

FIGS. 4 to 6 are diagrams describing a case where a location of a UE is calculated via a SL, according to an embodiment of the disclosure. However, the case where a location of a UE is calculated via a SL in the disclosure is not limited to the cases illustrated in FIGS. 4 to 6. In FIGS. 4 to 6, signaling of positioning configuration information, transmission of S-PRS, transmission of information measured for positioning or measured positioning information, and location information (known location) carried by the UE are each illustrated in different forms. S-PRS transmission may be performed in either two or one direction. FIG. 4(a) illustrates an example of a case where a SL UE that is not connected to a LS provides positioning configuration and a target UE that is not connected to the LS performs positioning calculation. This may correspond to Case 1 in Table 1. In this case, an indication for positioning-related configuration information may be broadcast, unicast, or groupcast by the target UE to another UE via a SL. In addition, the target UE may perform positioning calculations based on the provided positioning signals.

FIG. 4(b) illustrates an example of a case where a SL UE that is not connected to a LS provides positioning configuration and a target UE is located within the network coverage and performs positioning calculations on the LS connected to a base station. This may correspond to Case 2 in Table 1. In this case, an indication for positioning-related configuration information may be broadcast, unicast, or groupcast by the target UE to another UE via a SL. In addition, the target UE may perform positioning measurements based on the provided positioning signals and report the measured positioning information to the base station because the target UE is within the base station coverage. Then, the corresponding measurement information may be reported to the LS connected to the base station, so that the LS may perform positioning calculations.

FIG. 4(c) illustrates an example of a case where a SL UE that is not connected to a LS provides positioning configuration and performs positioning calculations on the LS via the SL UE connected to the LS. This may correspond to Case 3 in Table 1. In this case, an indication for positioning-related configuration information may be broadcast, unicast, or groupcast by the target UE to another UE via a SL. In addition, the target UE may perform positioning measurement based on the provided positioning signal and report the measured positioning information to the UE connected to the LS because the target UE is within the SL coverage of the UE connected to the LS. It is noted that although FIG. 4(c) illustrates the UE connected to the LS as an anchor UE (RSU), it may also be a UE other than the RSU. Thereafter, the corresponding measurement information is reported to the LS connected to the anchor UE (RSU), so that the LS may perform positioning calculation.

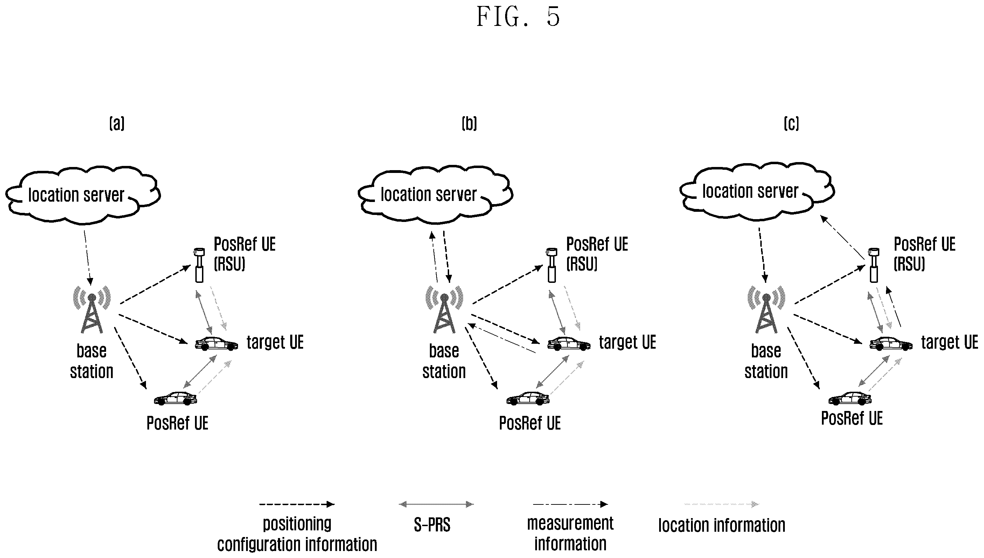

FIG. 5(a) illustrates an example of a case where a SL UE is located within the network coverage and the LS connected to a base station provides positioning configuration, and a target UE that is not connected to the LS performs positioning calculations. This may correspond to Case 4 in Table 1. In this case, a positioning protocol such as LPP may be used to provide positioning configuration information from the LS connected to the base station. In addition, the target UE may perform positioning calculations based on the provided configuration information and positioning signals.

FIG. 5(b) illustrates an example of a case where a SL UE is located within the network coverage and the LS connected to a base station provides positioning configuration, and a target UE is located within the network coverage and the LS connected to the base station performs positioning calculations. This may correspond to Case 5 in Table 1. In this case, a positioning protocol such as LPP may be used to provide positioning configuration information from the LS connected to the base station. In addition, the target UE may perform positioning measurement based on the provided configuration information and positioning signal, and report the measured positioning information to the base station because the target UE is within the base station coverage. Then, the corresponding measurement information is reported to the LS connected to the base station, and the LS may perform positioning calculation.

FIG. 5(c) illustrates an example of a case where a SL UE is located within the network coverage, and the LS connected to a base station provides positioning configuration, and the LS performs positioning calculation through the SL UE connected to the LS. This may correspond to Case 6 in Table 1. In this case, the LS connected to the base station may provide positioning configuration information using a positioning protocol such as LPP. In addition, the target UE may perform positioning measurement based on the provided configuration information and positioning signal, and report the measured positioning information to the UE connected to the LS because the target UE is within the SL coverage of the UE connected to the LS. In FIG. 5(c), it is noted that although the UE connected to the LS is illustrated as an anchor UE (RSU), it may be a UE other than an RSU. Thereafter, the corresponding measurement information is reported to the LS connected to the anchor UE (RSU), so that the LS may perform positioning calculations.

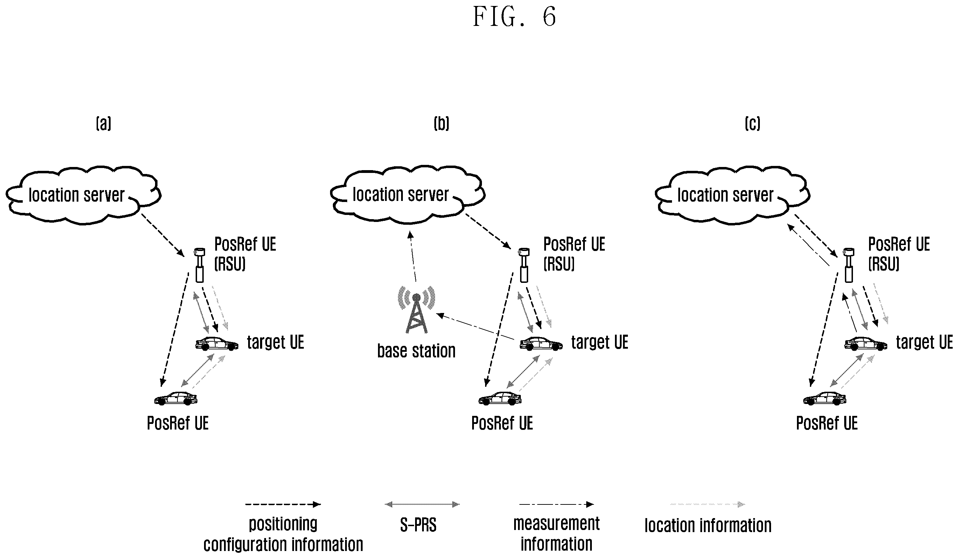

FIG. 6(a) illustrates an example of a case where a positioning configuration is provided from a LS through a SL UE connected to the LS and a target UE that is not connected to the LS performs positioning calculation. This may correspond to Case 7 in Table 1. In this case, a positioning protocol such as LPP may be used to provide positioning configuration information from the LS connected to the UE. In addition, the target UE may perform positioning calculation based on the provided configuration information and positioning signal.

FIG. 6(b) illustrates an example of a case where a positioning configuration is provided from a LS server through a SL UE connected to the LS and a target UE is located within the network coverage and performs positioning calculation from the LS connected to a base station. This may correspond to Case 8 in Table 1. In this case, a positioning protocol such as LPP may be used to provide positioning configuration information from the LS connected to the UE. In addition, the target UE may perform positioning measurement based on the provided configuration information and positioning signal, and report the measured positioning information to the base station because the target UE is within the base station coverage. Then, the corresponding measurement information is reported to the LS connected to the base station, and the LS may perform positioning calculation.

FIG. 6(c) illustrates an example of a case where a LS provides positioning configuration through a SL UE connected to the LS, and the LS performs positioning calculation through the SL UE connected to the LS. This may correspond to Case 9 of Table 1. In this case, a positioning protocol such as LPP may be used to provide positioning configuration information from the LS connected to the UE. In addition, the target UE may perform positioning measurement based on the provided configuration information and positioning signal, and report the measured positioning information to the UE connected to the LS because the target UE is within the SL coverage of the UE connected to the LS. In FIG. 6(c), it is noted that the UE connected to the LS is illustrated as an anchor UE (RSU), but it may be a UE other than an RSU. Thereafter, the corresponding measurement information is reported to the LS connected to the anchor UE (RSU), so that the LS may perform positioning calculations.

The following embodiment describes a method for performing TDOA using S-PRS transmitted through SL, among various positioning methods. It is noted that the SL positioning method in the invention is not limited to TDOA. In particular, various positioning methods described above may be applied to SL positioning.

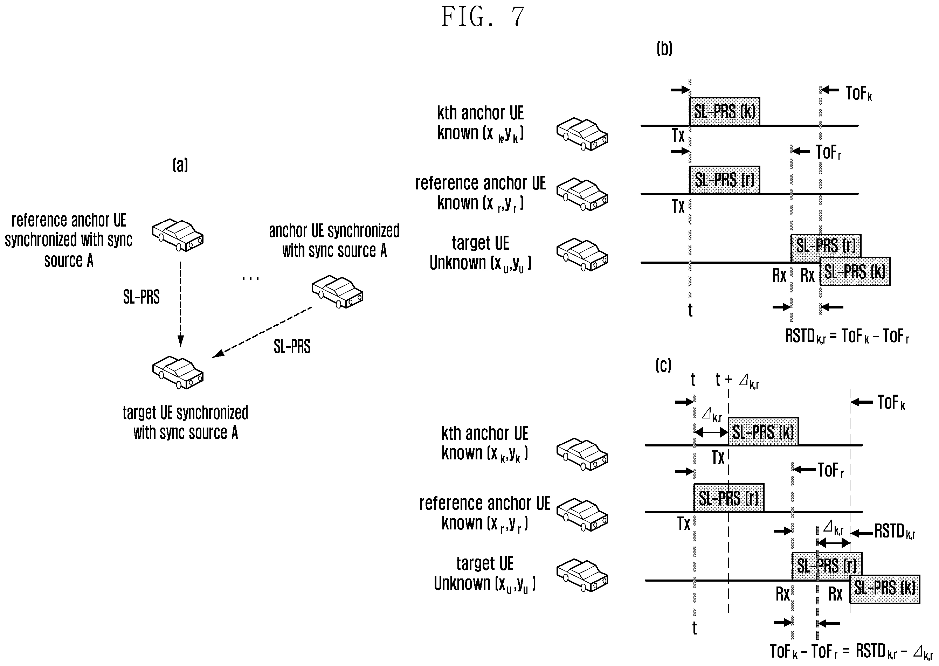

FIG. 7 is a diagram describing a case where positioning is performed using TDOA scheme 1, according to an embodiment of the disclosure. With reference to FIG. 7(a), a case where one or more anchor UEs transmit S-PRS to a target UE is illustrated. Here, it is assumed that the anchor UEs and target UE are synchronized with the same sync source A. In this case, the sync source A may be a base station, a GNSS, or another UE (SycRef UE) transmitting a SL synchronization signal. In addition, one of the anchor UEs may be selected and determined as a reference anchor UE. In case that the target UE receives S-PRS from the kth anchor UE, a Reference Signal Time Difference (RSTD) for TDOA may be defined as in Equation 1 below.

[Equation 1]

$$\text{RSTD}=(\text{PRS reception time from kth UE}) - (\text{PRS reception time from reference UE})$$

The RSTD in Equation 1 above may be named by another term. For example, the RSTD may be named as SL RSTD. In Equation 1 above, the reference UE means a reference anchor UE, which may be a UE that may send S-PRS to the target UE at the fastest time and may be a UE located closest to the target UE. For example, a UE with the largest Reference Signal Received Power (RSRP) may be selected as the reference anchor UE. The method for determining the reference anchor UE in the disclosure is not limited thereto. The determination of the reference anchor UE may be determined by the target UE, or may be determined by another UE or base station. In this case, the other UE or base station may be a UE or base station connected to a LS. When measuring the RSTD of Equation 1 above, it may be assumed that the anchor UEs simultaneously send S-PRS to the target UE, and it may be assumed that a clock timing between the anchor UEs is perfect. This assumption may be interpreted as a case where the synchronization between the anchor UEs transmitting the S-PRS is perfect. In case that the synchronization between the anchor UEs transmitting the S-PRS is not well matched, an error may occur in the RSTD measurement.

First, FIG. 7(b) illustrates a case where the synchronization between the anchor UEs transmitting the S-PRS is perfect. According to FIG. 7(b), a case is illustrated where the kth anchor UE and the reference anchor UE simultaneously transmit S-PRS to the target UE. If the S-PRS from the reference anchor UE arrives at the target UE first and the S-PRS from the kth anchor UE arrives at the target UE, the target UE will be able to calculate the RSTD by Equation 1 above. In FIG. 7(b), Time of Fight (ToF) means the time at which the S-PRS is transmitted. The ToF between the two-dimensional position $(x_u, y_u)$ of the target UE and the two-dimensional position $(x_k, y_k)$ of the kth anchor UE may be expressed as

$$\frac{\sqrt{(x_u - x_k)^2 + (y_u - y_k)^2}}{c}$$

using the relationship of 'time = distance / speed'. Here, c is the speed, and the speed of light may be applied. More specifically, in case that the synchronization between anchor UEs is perfect, the location of the target UE may be calculated through Equation 2 below. In Equation 2, positioning for a two-dimensional position is assumed. In order to perform two-dimensional and three-dimensional absolute positioning, multiple anchor UEs may be required.

[Equation 2]

$$RSTD_{r,k} = \frac{\sqrt{(x_u - x_k)^2 + (y_u - y_k)^2}}{c} - \frac{\sqrt{(x_u - x_r)^2 + (y_u - y_r)^2}}{c} + (n_k - n_r)$$

In Equation 2 above, c is the speed and the speed of light may be applied. In the above Equation, the location $(x_u, y_u)$ of the target UE is unknown, and the location $(x_k, y_k)$ of the kth anchor UE and the location $(x_r, y_r)$ of the reference anchor UE are assumed to be known. $n_k$ and $n_r$ may correspond to the measurement error of the target UE. In TDOA 1 scheme, the location information of the anchor UEs may be provided to the target UE through a SL, and in this case, the target UE may directly calculate its own location. In contrast, the location information of the anchor UEs may be transmitted to other UEs and base station. In this case, the other UEs and base station may be UEs and base station connected to a LS. Further, the location of the target UE may also be calculated by other UEs and base station. In case that the location of the target UE is calculated by other UEs and base station, the RSTD information calculated by the target UE may be transmitted to other UEs and base station. In this case, the other UEs and base station may be UEs and base station connected to the LS. In addition, the indication of the corresponding information may be made through SCI (1st SCI or 2nd SCI) or DCI, MAC-CE, RRC or PC5-RRC, etc. In the disclosure, the indication method of the corresponding information may not be limited to a specific method.

In contrast, FIG. 7(c) illustrates a case where the synchronization between anchor UEs transmitting S-PRS is not well matched. According to FIG. 7(c), a case is illustrated where the kth anchor UE and the reference anchor UE cannot transmit S-PRS to the target UE at the same time. This may be the case where the clock timing is different due to the difference in oscillators between the anchor UEs. In addition, a case may be included where the anchor UEs cannot transmit S-PRS at the same time for other reasons. A time drifting between the kth anchor UE and the reference anchor UE due to this is illustrated as $\Delta_{k,r}$. If the S-PRS from the reference anchor UE arrives at the target UE first and the S-PRS from the kth anchor UE arrives at the target UE, the target UE will be able to calculate the RSTD by Equation 1 above. In FIG. 7(c), Time of Fight (ToF) means the time at which the S-PRS is transmitted. The ToF between the two-dimensional location $(x_u, y_u)$ of the target UE and the two-dimensional location $(x_k, y_k)$ of the kth anchor UE may be expressed as

$$\frac{\sqrt{(x_u - x_k)^2 + (y_u - y_k)^2}}{c}$$

using the relationship of 'time = distance / speed'. Here, c is the speed and the speed of light may be applied. More particularly, in case that the synchronization between the anchor UEs is not well matched, the location of the target UE may be calculated by Equation 3 below. In Equation 3, positioning for the two-dimensional location is assumed. In order to perform two-dimensional and three-dimensional absolute positioning, multiple anchor UEs may be required.

[Equation 3]

$$RSTD_{r,k} = \frac{\sqrt{(x_u - x_k)^2 + (y_u - y_k)^2}}{c} - \frac{\sqrt{(x_u - x_r)^2 + (y_u - y_r)^2}}{c} + \Delta_{k,r} + (n_k - n_r)$$

In the above Equation, c is the speed and the speed of light may be applied. In the above Equation, the location $(x_u, y_u)$ of the target UE is unknown, and the location $(x_k, y_k)$ of the kth anchor UE and the location $(x_r, y_r)$ of the reference anchor UE are assumed to be known. $n_k$ and $n_r$ may correspond to measurement errors of the target UE. In addition, $\Delta_{k,r}$ may correspond to time drifting errors that occur due to mismatched synchronization between the anchor UEs. Methods for reducing such time drifting errors will be proposed through the following embodiments. In TDOA 1 scheme, the location information of the anchor UEs may be provided to the target UE through a SL, and in this case, the target UE may directly calculate its own position. In contrast, the location information of the anchor UEs may be transmitted to other UEs and base station. In this case, the other UEs and base station may be UEs and base station connected to a LS. Further, the location of the target UE may be calculated by other UEs and base station. In case that the location of the target UE is calculated by other UEs and base station, the RSTD information calculated by the target UE may be transmitted to other UEs and base station. In this case, the other UEs and base station may be UEs and base station connected to a LS. In addition, the indication of the corresponding information may be made through SCI (1st SCI or 2nd SCI) or DCI, MAC-CE, RRC or PC5-RRC, etc. In the disclosure, the method for indicating the corresponding information may not be limited to a specific method.

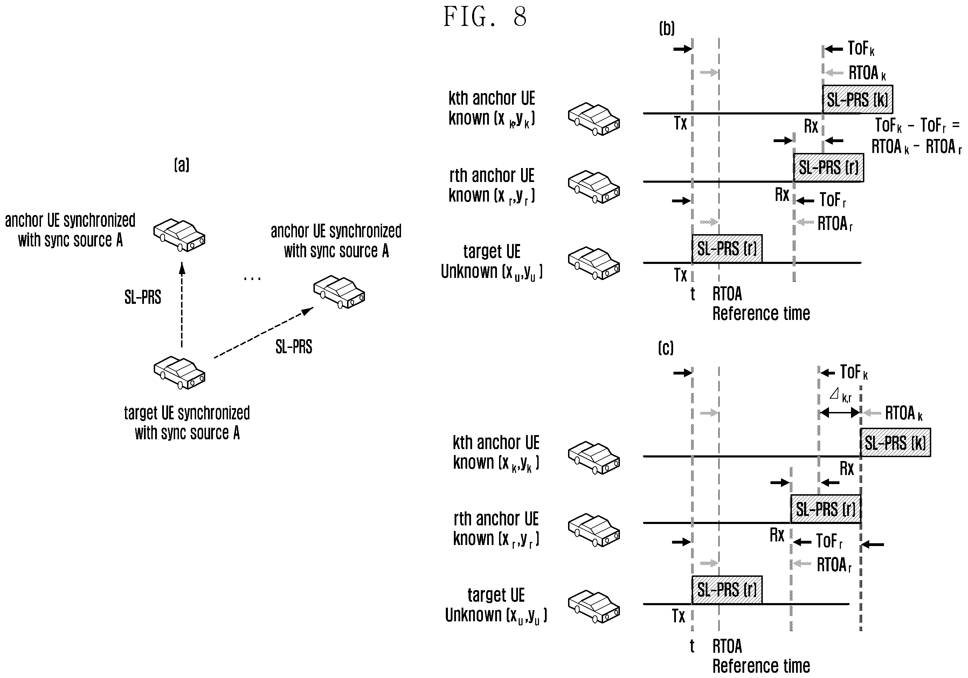

FIG. 8 is a diagram describing a case where positioning is performed using TDOA 2 scheme, according to an embodiment of the disclosure. With reference to FIG. 8(a), a case where a target UE transmits S-PRS to one or more anchor UEs is illustrated. Here, it is assumed that the anchor UEs and the target UE are synchronized with the same sync source A. In this case, the sync source A may be a base station, GNSS, or another UE (SycRef UE) transmitting a SL synchronization signal. In case that the jth anchor UE receives S-PRS from the target UE, a method for calculating Relative Time of Arrival (RTOA) for TDOA may be defined as in Equation 4 below.

$$[\text{Equation 4}]$$

$$\text{RTOA} = (\text{PRS reception time at } j^{th} \text{ UE}) - (\text{RTOA reference time})$$

The RTOA in Equation 4 above may be named by another term. For example, the RTOA may be named SL RTOA. In Equation 4 above, the RTOA reference time may be defined as a specific time at which the S-PRS is transmitted. The RTOA reference time may be determined as a slot and subframe in which the S-PRS is transmitted from the starting point of a System frame number (SFN). In addition, a method for indicating the RTOA reference time to the anchor UEs may also be considered. The corresponding indication may be made by the target UE or by other UEs and base station. In this case, the other UEs and base station may be UEs and base station connected to a LS. In addition, the corresponding indication may be made through SCI (1st SCI or 2nd SCI) or DCI, MAC-CE, RRC or PC5-RRC. etc. In the disclosure, the indication method of the corresponding information may not be limited to a specific method. In Equation 4, the anchor UEs may be assumed to have perfect clock timing between anchor UEs when measuring RTOA. In case that this assumption is not satisfied, an error may occur in the RTOA measurement.

First, FIG. 8(b) illustrates a case where the clock timing between anchor UEs is perfect. According to FIG. 8(b), a case is illustrated where a target UE transmits S-PRS to the kth anchor UE and the rth anchor UE. When the S-PRS sent by the target UE arrives at the anchor UEs, the anchor UEs may calculate RTOA through Equation 4 above and the RTOA reference time illustrated in FIG. 8(b). In FIG. 8(b), Time of Fight (ToF) means the time at which S-PRS is transmitted. More particularly, in case that the clock timing between anchor UEs is perfect, the location of the target UE may be calculated through Equation 5 below. In Equation 5, positioning for a two-dimensional position is assumed. Multiple anchor UEs may be required to perform two-dimensional and three-dimensional absolute positionings.

$$[\text{Equation 5}]$$

$$RSTD_k - RSTD_r = \frac{\sqrt{(x_u - x_k)^2 + (y_u - y_k)^2}}{c} - \frac{\sqrt{(x_u - x_r)^2 + (y_u - y_r)^2}}{c} + (n_k - n_r)$$

In Equation 5 above, c is the speed and the speed of light may be applied. In Equation 5 above, the location $(x_u, y_u)$ of the target UE is unknown and the location $(x_k, y_k)$ of the kth anchor UE and the location $(x_r, y_r)$ of the reference anchor UE are assumed to be known. $n_k$ and $n_r$ may correspond to the measurement error of the target UE. In TDOA 2 scheme, the location information of the RTOA and anchor measured by the anchor UEs may be provided to the target UE through a SL, and in this case, the target UE may directly calculate its own position. In contrast, the location information of the RTOA and anchor measured by the UEs may be transmitted to other UEs and base station. In this case, the other UEs and base station may be UEs and base station connected to a LS. Further, the location of the target UE may be calculated by other UEs and base station. In addition, the indication of the corresponding information may be made through SCI (1st SCI or 2nd SCI), DCI, MAC-CE, RRC, or PC5-RRC, etc. In the disclosure, the indication method of the corresponding information may not be limited to a specific method.

In contrast, FIG. 8(c) illustrates a case where the clock timing between anchor UEs receiving S-PRS is not well-aligned. FIG. 8(c) illustrates a case of clock time drifting between anchor UEs receiving S-PRS sent by a target UE is $\Delta_{k,r}$ This may be a case where the clock timing is different due to an oscillator difference between the anchor UEs. FIG. 8(c) illustrates a case where the target UE transmits S-PRS to the kth anchor UE and the rth anchor UE. When the S-PRS sent by the target UE arrives at the anchor UEs, the anchor UEs will be able to calculate RTOA through the RTOA reference time illustrated in Equation 4 and FIG. 8(c). In FIG. 8(c), Time of Fight (ToF) means the time at which the S-PRS is transmitted. More particularly, in case that the clock timing between the anchor UEs is not well-aligned, the location of the target UE may be calculated through Equation 6 below. Equation 6 assumes positioning for a two-dimensional position. Multiple anchor UEs may be required to perform a two-dimensional and three-dimensional absolute positionings.

[Equation 6]

$$RSTD_k - RSTD_r = \frac{\sqrt{(x_u\text{-}x_k)^2+(y_u\text{-}y_k)^2}}{c} - \frac{\sqrt{(x_u\text{-}x_r)^2+(y_u\text{-}y_r)^2}}{c} + \Delta_{k,r} + (n_k\text{-}n_r)$$

In the above Equation, c is the speed and the speed of light may be applied. In the above Equation, the location $(x_u, y_u)$ of the target UE is unknown and the location $(x_k, y_k)$ of the kth anchor UE and the location $(x_r, y_r)$ of the reference anchor UE are assumed to be known. $n_k$ and $n_r$ may correspond to measurement errors of the target UE. In addition, $\Delta_{k,r}$ may correspond to time drifting errors that occur due to incorrect clock timing between anchor UEs. Methods for reducing such time drifting errors will be proposed in the embodiments below. In TDOA 2 scheme, the RTOA measured by the anchor UEs and the location information of the anchor may be provided to the target UE through a SL, and in this case, the target UE may directly calculate its own position. In contrast, the RTOA measured by the UEs and the location information of anchor may be transmitted to other UEs and base station. In this case, the other UEs and base station may be UEs and base station connected to a LS. Further, the location of the target UE may also be calculated by other UEs and base station. In addition, the indication of the corresponding information may be made through SCI (1st SCI or 2nd SCI) or DCI, MAC-CE, RRC or PC5-RRC, etc. It is noted that the indication is not limited to a specific method in the disclosure.

In the above FIG. 7(c), a case is illustrated where the synchronization between anchor UEs transmitting S-PRS is not well-aligned. FIG. 8(c) illustrates a case where the clock timing between anchor UEs receiving S-PRS is not well aligned. This may be a case where the clock timing is different due to the difference in oscillators between anchor UEs. The higher the performance of the oscillator, the lower the clock timing error rate, but the higher the price, which may be a burden on the cost of the SL UE. The lower the performance of the oscillator, the higher the clock timing error rate, but there is an advantage of lowering the price. In addition, depending on the oscillator, the clock timing error rate may increase as the temperature increases. It would be difficult to assume that all SL UEs use high-performance oscillators due to the burden of cost. In addition, it would be difficult to assume that all SL UEs use oscillators with the same performance. Therefore, the disclosure proposes a solution to solve this problem.

In the disclosure, one or more of the embodiments below may be combined and used. That is, the embodiments below are not mutually exclusive, and a combination of them may be derived as a new embodiment.

In the disclosure, in case that positioning is performed in a TDOA scheme in a SL environment, synchronization and clock timing between UEs may not match well, various schemes and UE operations according to the solutions are proposed to solve this.

**<First Embodiment>**

A first embodiment presents a method that can solve the problem that synchronization and clock timing between UEs may not match well in case of performing SL positioning in a TDOA scheme.

The first embodiment is a method in which a requirement or threshold for the accuracy of an oscillator in SL communication are (pre-)configured. In the disclosure, the meaning of (pre-)configuration may mean configuration information that is pre-configured and stored in advance in a UE, or may mean a case in which a UE is configured by a base station in a cell-common method. Here, cell-common may mean that UEs in a cell receive the same configuration information from the base station. In this case, a method in which a UE receives a SL SL-SIB (sidelink system information block) from a base station to acquire cell-common information may be considered. In addition, it may mean a case where a UE is configured in a UE-specific method after an RRC connection is established with the base station. Here, UE-specific may be replaced with the term UE-dedicated and may mean that each UE receives configuration information with a specific value. In this case, a method in which a UE receives an RRC message from a base station and acquires UE-specific information may be considered. In addition, a method in which (pre-)configuration is configured to resource pool information and a method in which (pre-)configuration is not configured to resource pool information may be considered. In the case that (pre-)configuration is performed in resource pool information, all UEs operating in a corresponding resource pool may operate according to common configuration information, except for the UEs configured in a UE-specific method after RRC connection with the base station is established. However, a method in which (pre-)configuration is not configured to resource pool information is basically a method in which it is configured independently of the resource pool configuration information. For example, one or more modes (for example, A, B, and C) are (pre-)configured in a resource pool, and the (pre-)configuration information independently of the resource pool configuration information may indicate which mode among the (pre-)configured modes in the resource pool to use (for example, A or B or C).

In SL communication, a requirement or threshold for the accuracy of an oscillator is (pre-)configured, and in case that a UE transmitting and receiving via SL does not satisfy the requirement or threshold of the (pre-)configured oscillator, the corresponding UE may be restricted from performing transmission and reception for S-PRS. In other words, only UEs satisfying the requirement or threshold of the oscillator may perform transmission and reception for S-PRS. This may be interpreted that only UEs whose oscillator performance is guaranteed, in other words, whose capability is achieved, can perform positioning via TDOA. For example, in case that the requirement or threshold of the oscillator is configured to Xppm (part per million), transmission and reception for S-PRS can be performed only if the accuracy of the oscillator of the current UE satisfies 10ppm. In the disclosure, the value Xppm of the requirement or threshold of the oscillator may not be limited to a specific value. The above method may be limited only in case that SL positioning is performed using the TDOA scheme. In other words, in case that other SL positioning such as RTT is performed, transmission and reception for S-PRS may be performed even in case that the requirement or threshold of the oscillator is not satisfied. The SL positioning method (e.g., TDOA, RTT, etc.) may be determined in various ways. The SL positioning method may be determined through (pre-)configuration. Alternatively, a UE performing transmission and reception may directly determine the SL positioning method. Alternatively, another UE or base station may determine and indicate the SL positioning method. In this case, the other UE and base station may be a UE or base station connected to a LS. In addition, the indication of the SL positioning method may be made through SCI (1st SCI or 2nd SCI) or DCI, MAC-CE, RRC or PC5-RRC, etc. In the disclosure, the indication method of the SL positioning may not be limited to a specific method. In addition, the SL positioning method may be determined by a combination of the SL positioning methods presented above. For example, in case that one or more SL positioning methods are (pre-)configured, the final selection may be determined by the UE performing the transmission and reception, or by another UE or the base station.

**<Second Embodiment>**

A second embodiment presents a solution method for the problem that synchronization and clock timing between UEs may not match well in the case of performing SL positioning in the TDOA scheme.

The second embodiment is a method in which a UE indicates information about the accuracy of an oscillator to another UE or base station. In this case, the other UE and base station may be a UE and base station connected to a LS. This may be interpreted as a UE performing transmission and reception of S-PRS indicating the capability of the oscillator. Further, only a UE with the capability may perform positioning via TDOA. The above method may be limited only in case of performing SL positioning in the TDOA scheme. In other words, in case that another SL positioning such as RTT is performed, information about the accuracy of the oscillator may not be indicated. The SL positioning method (e.g., TDOA, RTT, etc.) may be determined in various ways. The SL positioning method may be determined through (pre-)configuration. Alternatively, the UE performing transmission and reception may directly determine the SL positioning method. Alternatively, another UE and base station may determine and indicate the SL positioning method. In this case, the other UE and base station may be a UE and base station connected to a LS. In addition, the indication of the SL positioning method may be made through SCI (1st SCI or 2nd SCI) or DCI, MAC-CE, RRC or PC5-RRC, etc. In the disclosure, the SL positioning indication method may not be limited to a specific method. In addition, it may be determined by a combination of the SL positioning methods presented above. For example, in case that one or more SL positioning methods are (pre-)configured, the final selection may be determined by the UE performing transmission and reception, or another UE or base station.

Specifically, when the accuracy of the oscillator is indicated, SL positioning may be performed in the TDOA scheme below. However, the disclosure is not limited to the methods below.

* When the anchor UEs indicate the accuracy of the oscillator, one or more anchor UEs capable of performing TDOA may be determined and selected by the target UE or other UEs and base station. In this case, the other UEs and base station may be UEs and base station connected to the LS. In this case, the selection of the anchor UE may be made based on the accuracy of the indicated oscillator. For example, only UEs with an accuracy of the indicated oscillator of Xppm (part per million) or higher may be selected to perform TDOA.
* When the target UE indicates a requirement or threshold for the accuracy of the oscillator to surrounding UEs, among the UEs that receive this indication, only UEs that satisfy the requirement or threshold of the oscillator may become anchor UEs and transmit and receive S-PRS. For example, in case that the requirement or threshold of the oscillator is configured to Xppm (part per million), only UEs that satisfy the accuracy of the oscillator of 10ppm may transmit and receive S-PRS.

The indication of the information about the accuracy of the oscillator may be made through SCI (1st SCI or 2nd SCI) or DCI, MAC-CE, RRC or PC5-RRC, etc. In the disclosure, the indication of the information about the accuracy of the oscillator may not be limited to a specific method. In case that the corresponding indication is made through SCI (1st SCI or 2nd SCI) or DCI, in order to save bits, information about the accuracy of the oscillator may be included only in case that SL positioning is performed in a TDOA scheme, otherwise, the corresponding information may not be included as zero bits. For details on determining the sidelink positioning method, the above description is referred. In addition, the information about the accuracy of the oscillator may include the following. However, it should be noted that the disclosure is not limited to the information below.

* The information about the accuracy of the oscillator may be expressed as a value or range in ppm (part per million) for the oscillator accuracy. The corresponding information may also mean a requirement or threshold.
* Information about the accuracy of the oscillator may be expressed as reliability or level of oscillator accuracy. Alternatively, it may be replaced with other similar terms. Reliability or level may be expressed as a specific value or range. For example, it may be interpreted that the closer it is to 0 between 0 and 1, the lower the reliability or level, and the closer it is to 1, the higher the reliability or level. In case that information about the accuracy of the oscillator is indicated as reliability or level, the reliability or level may include other information in addition to the accuracy of the oscillator. In particular, information about the accuracy of the oscillator means reliability or level of suitability for performing SL positioning, and may be a measure indicating not only the accuracy of the oscillator but also the suitability for various elements required to perform positioning.

**<Third Embodiment>**

A third embodiment presents a method to solve the problem that synchronization and clock timing between UEs may not match well in case of performing SL positioning in a TDOA scheme.

In the third embodiment, as explained through Equations 3 and 6, a method is provided in which a UE indicates a value of $\Delta_{k,r}$, that is, a time offset value that occurs due to synchronization and clock timing between UEs not matching well, to another UE or a base station. In this case, the other UE and base station may be a UE and base station connected to a LS. To this end, the UE should measure and indicate the time offset value that occurs due to synchronization and clock timing between UEs not matching well. However, practically, it may be very difficult to measure a value of $\Delta_{k,r}$ accurately. Therefore, as an alternative, a value that may affect the time offset, such as a Timing Advanced (TA) value, may be indirectly indicated. Information about this may be indicated through SCI (1st SCI or 2nd SCI) or DCI, MAC-CE, RRC or PC5-RRC, etc. In the disclosure, the corresponding indication may not be limited to a specific method. In case that the corresponding indication is made via SCI (1st SCI or 2nd SCI) or DCI, in order to save bits, the corresponding information may be included only in case that SL positioning is performed in a TDOA scheme, otherwise it may not be included as zero bits.

**<Fourth Embodiment>**

A fourth embodiment presents a method to synchronize UEs to the same source when performing SL positioning, considering the case where UEs may be synchronized with different sources in the SL.

In particular, in the SL, UEs may be synchronized with a base station, GNSS, or another UE (SynRef UE, a UE transmitting a sync signal). In addition, UEs are synchronized according to a predetermined priority rule. Therefore, there may be a case where UEs are synchronized with different sources. In general, positioning may be performed only between UEs having the same synchronization source. However, in order to secure more UEs that may perform positioning, it may be advantageous for UEs to synchronize to a predetermined synchronization source. Therefore, the synchronization source used when performing SL positioning may be separately configured and indicated. In this case, the synchronization source may be a base station, GNSS, or another UE (SynRef UE, a UE transmitting a sync signal).

The first method that enables this is a method in which the synchronization source used when performing SL positioning is (pre-)configured. In this case, the synchronization source configured by (pre-)configuration has a higher priority than the synchronization source according to the previously determined priority rule, so that the UE may synchronize with the (pre-)configuration synchronization source.

The second method is a method in which the UE and base station indicate the synchronization source used when performing SL positioning. Here, the UE may be a target UE or a UE connected to a LS. In addition, the base station may be a base station connected to a server. The indication of the synchronization source used when performing SL positioning may be made through SCI (1st SCI or 2nd SCI) or DCI, MAC-CE, RRC or PC5-RRC, etc. In the disclosure, the indication of the synchronization source used when performing SL positioning may not be limited to a specific method. In this case, the indicated synchronization source has a higher priority than the synchronization source according to the previously determined priority rule, so that the UE may synchronize with the indicated synchronization source.

The third method is a method in which the synchronization source used when performing SL positioning is fixed to another UE (SynRef UE, a UE transmitting a sync signal). In this case, the SynRef UE may be a target UE or a UE connected to a LS. In this case, the SynRef UE has a higher priority than the synchronization source according to the previously determined priority rule, so the UE may be synchronized from the SynRef UE.

The above-presented methods may be limited only in case that SL positioning is performed in the TDOA scheme. In other words, in case that other SL positioning such as RTT is performed, the synchronization source according to the previously determined priority rule may be determined. The SL positioning method (e.g., TDOA, RTT, etc.) may be determined in various ways. The SL positioning method may be determined through (pre-)configuration. In addition, the UE performing transmission and reception may directly determine the SL positioning method. In addition, another UE and base station may determine the SL positioning method and indicate the same to the UE. In this case, other UEs and base stations may be UEs and base station connected to a LS. In addition, the indication of the SL positioning method may be made through SCI (1st SCI or 2nd SCI) or DCI, MAC-CE, RRC or PC5-RRC, etc. In the disclosure, the indication of the SL positioning method may not be limited to a specific method. In addition, the SL positioning method may be determined by a combination of the SL positioning methods presented above. For example, in the case where one or more SL positioning methods are (pre-)configured, the final selection may be determined by the UE performing transmission and reception, or another UE or base station.

### <Fifth Embodiment>

In a fifth embodiment, in the case of performing SL positioning in a TDOA scheme, considering that synchronization and clock timing between UEs may not match well, a suitable UE is selected, but positioning-related UE operations in the case where the number of anchor UEs is insufficient are presented.

In the case of performing SL positioning in a TDOA scheme according to the methods presented in the above embodiments, if a UE whose synchronization and clock timing between UEs match well is selected, a case where the number of available anchor UEs decreases may occur. As described above, a large number of anchor UEs are required to acquire two-dimensional or three-dimensional coordinate information of a UE through absolute positioning. Therefore, in case that the number of available anchor UEs is insufficient, the UE may not perform absolute positioning in a TDOA scheme. Instead, relative positioning or ranging may be performed. In addition, in this case, the UE may perform another positioning method or another positioning method such as RTT. This may be requested to another UE and base station, and in this case, the other UE and base station may be a UE and base station connected to a LS. An indication requesting a change to another positioning may be made via SCI (1st SCI or 2nd SCI) or DCI, MAC-CE, RRC or PC5-RRC, etc. In the disclosure, an indication requesting a change to another positioning may not be limited to a specific method. In addition, the corresponding indication may be made of 1-bit information. In particular, '0' may mean that a change in positioning method is not requested, and '1' may mean that a change in positioning method is requested.

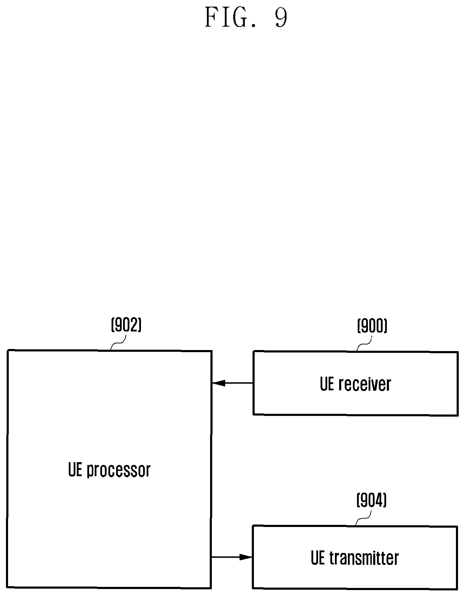

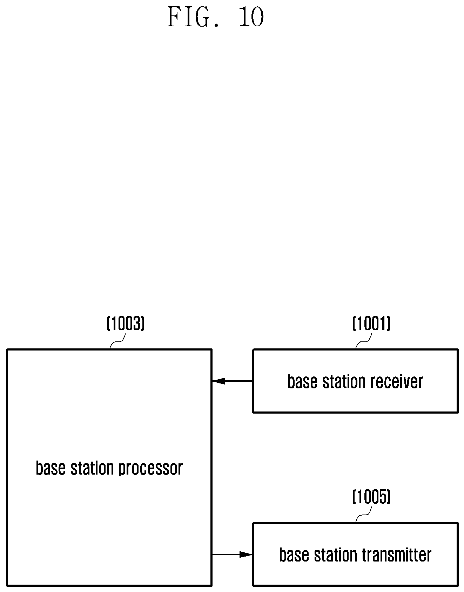

Transmitters, receivers, and processors of a UE and base station for performing the above embodiments of the disclosure are illustrated in FIGS. 9 and 10, respectively. The above embodiments disclose a method for a UE to perform positioning in a SL, and in order to perform the method, receivers, processors, and transmitters of a base station and UE need to operate according to the embodiments.

In particular, FIG. 9 is a block diagram illustrating an internal structure of a UE according to an embodiment of the disclosure. As illustrated in FIG. 9, the UE of the disclosure may include a UE receiver 900, a UE transmitter 904, and a UE processor 902. In the embodiment of the disclosure, the UE receiver 900 and UE transmitter 904 may be collectively referred to as a transceiver. The transceiver may transmit and receive signals to and from a base station. The signal may include control information and data. To this end, the transceiver may be constituted with an RF transmitter for up-converting and amplifying a frequency of a signal being transmitted, an RF receiver for low-noise-amplifying a received signal and down-converting a frequency of the received signal, and the like. In addition, the transceiver may receive a signal through a radio channel, output the signal to the UE processor 902, and transmit a signal output from the UE processor 902 through a radio channel. The UE processor 902 may control a series of operations to allow the UE to operate according to the above-described embodiments.

FIG. 10 is a block diagram illustrating an internal structure of a base station according to an embodiment of the disclosure. As illustrated in FIG. 10, the base station of the disclosure may include a base station receiver 1001, a base station transmitter 1005, and a base station processor 1003. In the embodiment of the disclosure, the base station receiver 1001 and base station transmitter 1005 may be collectively referred to as a transceiver. The transceiver may transmit and receive signals to and from a UE. The signal may include control information and data. To this end, the transceiver may be constituted with an RF transmitter for up-converting and amplifying a frequency of a signal being transmitted, an RF receiver for low-noise-amplifying a received signal and down-converting a frequency of the received signal, and the like. In addition, the transceiver may receive a signal through a radio channel, output the signal to the base station processor 1003, and transmit a signal output from the base station processor 1003 through a radio channel. The base station processor 1003 may control a series of operations to allow the base station to operate according to the above-described embodiments.

Meanwhile, the embodiments of the disclosure described in this specification and drawings are only specific examples presented to easily explain the technical contents of the disclosure and help in understanding the disclosure, and are not intended to limit the scope of the disclosure. That is, it is obvious to a person having ordinary skill in the art to which the disclosure pertains that other modified examples based on the technical idea of the disclosure are possible. **In** addition, each of the above embodiments can be combined and operated as needed. For example, all embodiments of the disclosure may be operated as a base station and a UE by combining parts thereof.

**Claims**

1. A method performed by a first terminal operating in a wireless communication system and supporting a sidelink, comprising:

   receiving a sidelink positioning reference signal (S-PRS) from a plurality of second terminals or transmitting the S-PRS to the plurality of second terminals;
   acquiring a first time offset value based on a synchronization error between the plurality of second terminals; and
   transmitting the first time offset value to a location management server (LMF) or a third terminal connected to the location management server,
   wherein the plurality of second terminals are anchor UEs for location measurement of the first terminal, and
   wherein location information of the first terminal is calculated based on a measurement value of the S-PRS and the first time offset value.

2. The method of claim 1, wherein the transmitting the first time offset value to the location management server or the third terminal is performed via a positioning protocol.

3. The method of claim 1, wherein the acquiring the first time offset value is performed by calculation based on reception from at least one of the plurality of second terminals or a measurement value of S-PRS received from at least one of the plurality of second terminals.

4. The method of claim 1, wherein the first terminal is constituted with the location management server.

5. The method of claim 1, wherein the calculation of the location information of the first terminal is performed on the first terminal, the second terminal, the third terminal or the location management server.

6. A method performed by at least one of a plurality of second terminals operating in a wireless communication system and supporting a sidelink, comprising:

   transmitting S-PRS to a first terminal or receiving the S-PRS from the first terminal;
   acquiring a first time offset value based on a synchronization error between the plurality of second terminals; and
   transmitting the first time offset value to a location management server (LMF) or a third terminal connected to the location management server,
   wherein the plurality of second terminals are anchor UEs for location measurement of the first terminal, and
   wherein location information of the first terminal is calculated based on a measurement value of the S-PRS and the first time offset value.

7. The method of claim 6, wherein the transmitting the first time offset value to the location management server or the third terminal is performed via a positioning protocol.

8. The method of claim 6, wherein the acquiring the first time offset value is performed by calculation based on reception from the first terminal or a measurement value of S-PRS received from at least one of the plurality of second terminals.

9. The method of claim 6, wherein the second terminal is constituted with the location server.

10. The method of claim 6, wherein the calculation of the location information of the first terminal is performed on the first terminal, the second terminal, the third terminal or the location management server.

11. A first terminal which operates in a wireless communication system and supports a sidelink, comprising:

a transceiver; and
a processor,
wherein the processor is configured to:

receive a sidelink positioning reference signal (S-PRS) from a plurality of second terminals or transmit the S-PRS to the plurality of second terminals,
acquire a first time offset value based on a synchronization error between the plurality of second terminals, and
transmit the first time offset value to a location management server (LMF) or a third terminal connected to the location management server,
wherein the plurality of second terminals are anchor UEs for location measurement of the first terminal, and
wherein location information of the first terminal is calculated based on a measurement value of the S-PRS and the first time offset value.

12. The first terminal of claim 11, wherein the first time offset value is transmitted to the location management server or the third terminal via a positioning protocol.

13. The first terminal of claim 11, wherein the acquiring the first time offset value is performed by calculation based on reception from at least one of the plurality of second terminals or a measurement value of S-PRS received from at least one of the plurality of second terminals.

14. A second terminal among a plurality of the second terminals which operates in a wireless communication system and support a sidelink, comprising:

a transceiver; and
a processor,
wherein the processor is configured to:

transmit S-PRS to a first terminal or receive the S-PRS from the first terminal,
acquire a first time offset value based on a synchronization error between the plurality of second terminals, and
transmit the first time offset value to a location management server (LMF) or a third terminal connected to the location management server
wherein the plurality of second terminals are anchor UEs for location measurement of the first terminal, and
wherein location information of the first terminal is calculated based on a measurement value of the S-PRS and the first time offset value.

15. The second terminal of claim 14, wherein the acquiring the first time offset value is performed by calculation based on reception from the first terminal or a measurement value of S-PRS received from at least one of the plurality of second terminals.

# FIG. 1

(a) In-coverage scenario

base station

downlink (DL)    downlink (DL)

uplink (UL)

sidelink (SL)

UE-1    sidelink (SL)    UE-2

(b) Partial coverage scenario

base station

downlink (DL)

uplink (UL)

sidelink (SL)

UE-1    sidelink (SL)    UE-2

(c) Out-of-coverage scenario

sidelink (SL)

UE-1    sidelink (SL)    UE-2

(d) Inter-cell V2X communitation scenario

base station

downlink (DL)

uplink (UL)

UE-1

base station

downlink (DL)

uplink (UL)

UE-2

sidelink (SL)

sidelink (SL)

EP 4 590 040 A1

# FIG. 2

(a) unicast
communication

201                                              202

sidelink (SL)

UE-1                                             UE-2

(b) groupcast
communication

group A        212                group B        215

UE-2                                             UE-5

UE-1              UE-3              UE-4          UE-6        216

UE-7

211              213              214           217

EP 4 590 040 A1

FIG. 3

# FIG. 4

(a)

PosRef UE (RSU)

target UE

PosRef UE

(b)

location server

PosRef UE (RSU)

base station

target UE

PosRef UE

(c)

location server

PosRef UE (RSU)

PosRef UE (RSU)

target UE

PosRef UE

- - - - - - - →  positioning configuration information

←→  S-PRS

- - · - - · →  measurement information

- · - · - · →  location information

FIG. 5

# FIG. 6

(a)                           (b)                           (c)

location server               location server               location server

PosRef UE                     PosRef UE                     PosRef UE
(RSU)                         (RSU)                         (RSU)

target UE          base station        target UE                      target UE

PosRef UE                     PosRef UE                     PosRef UE

- - - - - ▶        ◀─────▶        - - · - - · ▶        · · · · · · · ▶
positioning           S-PRS        measurement        location information
configuration information              information

EP 4 590 040 A1

# FIG. 7

**(a)**

reference anchor UE
synchronized with sync
source A

anchor UE synchronized
with sync source A

SL-PRS

. . .

SL-PRS

target UE synchronized
with sync source A

**(b)**

kth anchor UE
known $(x_k, y_k)$

SL-PRS (k)

Tx

$\leftarrow$ ToF$_k$

reference anchor UE
known $(x_r, y_r)$

SL-PRS (r)

Tx

$\leftarrow$ ToF$_r$

target UE
Unknown $(x_u, y_u)$

SL-PRS (r)

Rx Rx SL-PRS (k)

t

RSTD$_{k,r}$ = ToF$_k$ – ToF$_r$

**(c)**

t   t + $\Delta_{k,r}$

kth anchor UE
known $(x_k, y_k)$

$\Delta_{k,r}$

SL-PRS (k)

Tx

$\leftarrow$ ToF$_k$

reference anchor UE
known $(x_r, y_r)$

SL-PRS (r)

Tx

$\leftarrow$ ToF$_r$

$\Delta_{k,r}$ $\leftarrow$ RSTD$_{k,r}$

target UE
Unknown $(x_u, y_u)$

SL-PRS (r)

Rx Rx SL-PRS (k)

t

ToF$_k$ – ToF$_r$ = RSTD$_{k,r}$ – $\Delta_{k,r}$

# FIG. 8

**(a)**

anchor UE synchronized
with sync source A

SL-PRS

· · ·

anchor UE synchronized
with sync source A

SL-PRS

target UE synchronized
with sync source A

**(b)**

$ToF_k$

$RTOA_k$

SL-PRS (k)

kth anchor UE
known $(x_k, y_k)$

Tx · · · Rx

$ToF_k - ToF_r =$
$RTOA_k - RTOA_r$

SL-PRS (r)

rth anchor UE
known $(x_r, y_r)$

Rx $ToF_r$

$RTOA_r$

SL-PRS (r)

target UE
Unknown $(x_u, y_u)$

Tx

t   RTOA
Reference time

**(c)**

$ToF_k$

$\triangle_{k,r}$   $RTOA_k$

SL-PRS (k)

kth anchor UE
known $(x_k, y_k)$

Rx

SL-PRS (r)

rth anchor UE
known $(x_r, y_r)$

Rx $ToF_r$

$RTOA_r$

SL-PRS (r)

target UE
Unknown $(x_u, y_u)$

Tx

t   RTOA
Reference time

EP 4 590 040 A1

FIG. 9

[902]

[900]

UE processor

UE receiver

[904]

UE transmitter

FIG. 10

(1003)

(1001)

base station receiver

base station processor

(1005)

base station transmitter

## INTERNATIONAL SEARCH REPORT

| International application No. |
|---|
| **PCT/KR2023/016133** |

### A. CLASSIFICATION OF SUBJECT MATTER

**H04W 64/00**(2009.01)i; **H04W 24/08**(2009.01)i; **H04W 72/20**(2023.01)i; **H04W 92/18**(2009.01)i; **G01S 5/02**(2010.01)i

According to International Patent Classification (IPC) or to both national classification and IPC

### B. FIELDS SEARCHED

Minimum documentation searched (classification system followed by classification symbols)

H04W 64/00(2009.01); G01S 19/25(2010.01); G01S 19/30(2010.01); G01S 5/00(2006.01); G01S 5/02(2010.01); G01S 5/10(2006.01); H04W 4/02(2009.01); H04W 4/40(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: S-PRS(Sidelink Positioning Reference Signal), 시간 오프셋 값(time offset value), 동기화 오류(synchronization error), 포지셔닝 프로토콜(Positioning Protocol), 위치 관리 서버(Location Management Function, LMF)

### C. DOCUMENTS CONSIDERED TO BE RELEVANT

| Category* | Citation of document, with indication, where appropriate, of the relevant passages | Relevant to claim No. |
|---|---|---|
| X | US 2021-0410103 A1 (QUALCOMM INCORPORATED) 30 December 2021 (2021-12-30)<br>See paragraphs [0049], [0053], [0092] and [0098]; claims 1-2, 4, 9 and 22; and figure 12. | 1-15 |
| A | US 2018-0217228 A1 (QUALCOMM INCORPORATED) 02 August 2018 (2018-08-02)<br>See paragraphs [0116]-[0130]; and figures 5A-5B. | 1-15 |
| A | WO 2022-116777 A1 (DATANG GOHIGH INTELLIGENT AND CONNECTED TECHNOLOGY (CHONGQING) CO., LTD.) 09 June 2022 (2022-06-09)<br>See claims 1-7. | 1-15 |
| A | WO 2021-221404 A1 (LG ELECTRONICS INC.) 04 November 2021 (2021-11-04)<br>See paragraphs [0201]-[0205]. | 1-15 |
| A | WO 2022-034483 A2 (LENOVO (SINGAPORE) PTE. LTD.) 17 February 2022 (2022-02-17)<br>See paragraphs [0145]-[0146]; and figures 9-10. | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 January 2024** | **25 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT Information on patent family members | | | International application No. PCT/KR2023/016133 | | |
|---|---|---|---|---|---|

| Patent document cited in search report | | | Publication date (day/month/year) | Patent family member(s) | | | Publication date (day/month/year) |
|---|---|---|---|---|---|---|---|
| US | 2021-0410103 | A1 | 30 December 2021 | BR | 112022025902 | A2 | 10 January 2023 |
|  |  |  |  | CN | 115804168 | A | 14 March 2023 |
|  |  |  |  | EP | 4173385 | A1 | 03 May 2023 |
|  |  |  |  | JP | 2023-534104 | A | 08 August 2023 |
|  |  |  |  | KR | 10-2023-0026339 | A | 24 February 2023 |
|  |  |  |  | TW | 202205888 | A | 01 February 2022 |
|  |  |  |  | US | 11617152 | B2 | 28 March 2023 |
|  |  |  |  | WO | 2022-005824 | A1 | 06 January 2022 |
| US | 2018-0217228 | A1 | 02 August 2018 | CN | 110192117 | A | 30 August 2019 |
|  |  |  |  | CN | 110192117 | B | 26 November 2021 |
|  |  |  |  | EP | 3577483 | A1 | 11 December 2019 |
|  |  |  |  | EP | 3577483 | B1 | 03 March 2021 |
|  |  |  |  | TW | 201830935 | A | 16 August 2018 |
|  |  |  |  | TW | I716660 | B | 21 January 2021 |
|  |  |  |  | US | 10649064 | B2 | 12 May 2020 |
|  |  |  |  | US | 11187779 | B2 | 30 November 2021 |
|  |  |  |  | US | 2020-0233057 | A1 | 23 July 2020 |
|  |  |  |  | WO | 2018-144146 | A1 | 09 August 2018 |
| WO | 2022-116777 | A1 | 09 June 2022 | CN | 112203223 | A | 08 January 2021 |
|  |  |  |  | CN | 112203223 | B | 02 March 2021 |
|  |  |  |  | EP | 4258699 | A1 | 11 October 2023 |
|  |  |  |  | KR | 10-2023-0098856 | A | 04 July 2023 |
| WO | 2021-221404 | A1 | 04 November 2021 | KR | 10-2023-0002810 | A | 05 January 2023 |
|  |  |  |  | US | 2023-0168386 | A1 | 01 June 2023 |
| WO | 2022-034483 | A2 | 17 February 2022 | AU | 2021-325422 | A1 | 09 March 2023 |
|  |  |  |  | AU | 2021-326057 | A1 | 09 March 2023 |
|  |  |  |  | BR | 112023002504 | A2 | 04 April 2023 |
|  |  |  |  | BR | 112023002513 | A2 | 04 April 2023 |
|  |  |  |  | CA | 3186407 | A1 | 17 February 2022 |
|  |  |  |  | CA | 3186670 | A1 | 17 February 2022 |
|  |  |  |  | CN | 116018867 | A | 25 April 2023 |
|  |  |  |  | CN | 116034285 | A | 28 April 2023 |
|  |  |  |  | CN | 116075738 | A | 05 May 2023 |
|  |  |  |  | EP | 4193166 | A2 | 14 June 2023 |
|  |  |  |  | EP | 4193167 | A2 | 14 June 2023 |
|  |  |  |  | EP | 4193731 | A1 | 14 June 2023 |
|  |  |  |  | JP | 2023-537985 | A | 06 September 2023 |
|  |  |  |  | KR | 10-2023-0048332 | A | 11 April 2023 |
|  |  |  |  | KR | 10-2023-0050334 | A | 14 April 2023 |
|  |  |  |  | US | 2023-0296752 | A1 | 21 September 2023 |
|  |  |  |  | US | 2023-0305099 | A1 | 28 September 2023 |
|  |  |  |  | US | 2023-0309066 | A1 | 28 September 2023 |
|  |  |  |  | WO | 2022-034483 | A3 | 21 April 2022 |
|  |  |  |  | WO | 2022-034484 | A2 | 17 February 2022 |
|  |  |  |  | WO | 2022-034484 | A3 | 05 May 2022 |
|  |  |  |  | WO | 2022-034485 | A1 | 17 February 2022 |

Form PCT/ISA/210 (patent family annex) (July 2022)